Europäisches Patentamt

European Patent Office

Office européen des brevets

(11) Veröffentlichungsnummer: **0 022 293**
**B1**

(12) **EUROPÄISCHE PATENTSCHRIFT**

(45) Veröffentlichungstag der Patentschrift:
02.03.83

(51) Int. Cl.³: **F 16 L 15/04, B 23 B 5/36**

(21) Anmeldenummer: **80200618.9**

(22) Anmeldetag: **28.06.80**

(54) **Verbindungselement zum Einschrauben in eine Leitung oder in einen Apparat zur Herstellung eines geschlossenen Druckmedium-Umlaufkreises und Verfahren zu dessen Herstellung.**

(30) Priorität: **06.07.79 CH 6320/79**

(73) Patentinhaber: **Baumgartner, Merzia, Wiesenstrasse 23, CH-5605 Dottikon (Kanton Aargau) (CH)**

(43) Veröffentlichungstag der Anmeldung:
**14.01.81 Patentblatt 81/2**

(72) Erfinder: **Andreolla, Florian, Wiesenstrasse 23, CH-5605 Dottikon (Kanton Aargau) (CH)**

(45) Bekanntmachung des Hinweises auf die Patenterteilung:
**02.03.83 Patentblatt 83/9**

(74) Vertreter: **Bovard, Fritz Albert et al, Bovard & Cie Patentanwälte VSP Optingenstrasse 16, CH-3000 Bern 25 (CH)**

(84) Benannte Vertragsstaaten:
**AT BE DE FR GB IT LU NL SE**

(56) Entgegenhaltungen:
**DE-B-2 217 288**
**DE-U-7 230 680**
**US-A-1 368 196**
**US-A-3 499 670**
**US-A-3 719 202**

BUNDESDRUCKEREI BERLIN

Verbindungselement zum Einschrauben in eine Leitung oder in einen Apparat zur Herstellung eines
geschlossenen Druckmedium-Umlaufkreises und Verfahren zu dessen Herstellung

Die Erfindung geht aus von einem Verbindungselement zum Einschrauben in eine Leitung oder in einen Apparat zur Herstellung eines geschlossenen Druckmedium-Umlaufkreises, mit einem hohlen Mehrkantkopf und einer hohlen mit dem Mehrkantkopf einstückigen Schraube mit Außengewinde, wobei in dem Mehrkantkopf in der Nähe des Gewindeendes der Schraube eine kammerförmige Kreisaussparung zur Aufnahme eines Dichtungsringes eingearbeitet ist.

Es ist bekannt, als Dichtungsmittel, Lacke, Pasten, Kitte, Fasern, Folienbänder, konische Gewinde und Dichtungsringe zu verwenden, um Druckverluste zwischen den Verbindungselementen und den entsprechenden, durch diese zu verbindenden Teile zu vermeiden. Das Druckmedium, das in dem Umlaufkreis strömt, ist entweder eine unter Druck stehende Flüssigkeit oder ein unter Druck stehendes Gas.

Die erstgenannten fünf Dichtungsmittel können die Funktion der Leitungen oder der Apparate beeinträchtigen, wenn sie in das Innere dieser Teile geraten. Konische Gewinde zerstören nicht selten Apparate- oder Leitungsteile durch ihre Keilwirkung. Wenn die Dichtungsringe auch nur geringfügig zu stark gequetscht werden, bersten sie oder sie werden aus der gewünschten Lage verdrängt. Die unzweckmäßige Verformung der Dichtungsringe durch Anziehen der Verbindungselemente verursacht eine vorzeitige Alterung der Dichtungsringe, durch welche ihre Dichtwirkung herabgesetzt oder sogar gleich null wird.

Allen bekannten oben beschriebenen Dichtungssystemen ist ein Übelstand gemeinsam, da die Dichtungsmittel bei der wiederholten Montage der Verbindungselemente in jedem Fall erneuert werden müssen.

Aus dem Vorschlag der internationalen Norm ISO/DIS 6 149 ist weiter bekannt, daß ein Dichtungsring zwischen dem Verbindungselement und dem zu verbindenden Teil so eingesetzt ist, daß er sich einerseits gegen die mit der Längsachse des Verbindungselements parallel verlaufende Wand am Gewindeende der Schraube und andererseits gegen eine sich konisch nach außen von der Längsachse des zu verbindenden Teiles erweiternde Wand abstützt.

In diesem Fall wirken aber die Kräfte gegen die parallel zu der Längsachse des Verbindungselements verlaufende Wand, die mit der Zeit senkrecht zur Längsachse des Verbindungselements nach innen deformiert wird.

Die Schraube des Verbindungselements weist am Gewindeende (in der Nähe des Mehrkantkopfes) einen Anschnitt auf, der vom Werkzeug beim Schneiden des Gewindes bedingt ist.

Es ist ferner bekannt, in die durch das Gewindeende und die Bodenfläche des Mehrkantkopfes eingeschlossene Ecke unter einer Neigung von 45° eine Aussparung zu schneiden, in welche der Dichtungsring eingelegt wird. Eine solche Aussparung hat aber eine durch einen stumpfen Winkel gebildete Kante, die für den Dichtungsring bei dessen Einführen in die Kreisaussparung eine Verletzungsgefahr darstellt.

Es ist aus der DE-GM 7 230 680 auch bekannt, die Kreisaussparung in der Bodenfläche des Mehrkantkopfes auf solche Weise auszuführen, daß der Anschnitt am Ende des Gewindes der Schraube belassen wird und in die Bodenfläche des Mehrkantkopfes eine zusätzliche Kreisaussparung ausgeschnitten wird. Durch die Hinterdrehung an der Innenkante der Aussparung entsteht eine Nase, die ein sicheres Festhalten des Dichtungsringes gewährleistet. Wenn aber der Dichtungsring nicht optimal nach den Ausmaßen der Kreisaussparung dimensioniert ist, können die Metallteile des Verbindungselements und des zu verbindenden Teiles nicht aufeinanderkommen und der in eine solche Kreisaussparung eingesetzte Kreisring wird so stark deformiert, daß er bald zerstört wird. Außerdem kann auch in diesem Fall der Dichtungsring bei seinem Einführen in die Kreisaussparung durch die Nase (Kante) der Kreisaussparung beschädigt werden. Die Montage des Dichtungsringes ist somit schwierig.

Der Erfindung liegt die Aufgabe zugrunde, ein Verbindungselement zu schaffen, das so gestaltet ist, daß der in die kreisförmige Aussparung des Verbindungselements einzuführende Dichtungsring in die richtige Stellung ohne seine Verletzung mühelos eingeführt werden kann. Die Kreisaussparung soll im Verbindungsteil schnell und wirtschaftlich hergestellt werden.

Diese Aufgabe wird bei einem Verbindungselement nach dem Oberbegriff des Patentanspruchs 1 auf solche Weise gelöst, daß das Gewindeende der Schraube stufenlos in die Wand der Kreisaussparung übergeht, so daß zwischen dem Gewindeende und der Kreisaussparungswand eine sich an das Gewindeende und die Kreisaussparungswand anschließende Führungsfläche für den Dichtungsring entsteht.

Das erfindungsgemäße Verfahren ist dadurch gekennzeichnet, daß ein einziges Schneidwerkzeug in einem einzigen Arbeitsgang zuerst senkrecht zur Längsachse des Verbindungselementes in den Anschnitt am Gewindeende der Schraube und anschließend parallel zur Längsachse des Verbindungselements in die Bodenfläche des Mehrkantkopfes geführt wird, wonach es aus der vollendeten Kreisaussparung zurückgezogen wird.

Die Erfindung wird nachstehend anhand der Zeichnung beispielsweise näher erläutert. Es zeigt

Fig. 1 eine Ansicht eines Verbindungselements, teilweise im Schnitt, mit einer kammerförmigen Kreisaussparung mit Dichtungsring,

Fig. 2 eine Ansicht von unten des Mehrkantkopfteiles des Verbindungselements nach der Fig. 1 mit der kammerförmigen Kreisaussparung und dem in ihr eingeführten Dichtungsring und

Fig. 3 eine Ansicht des in einen Teil eingeschraubten Dichtungselements nach der Fig. 1, teilweise im Schnitt,

Fig. 4 eine Ansicht eines Teiles des Verbindungselements und eines Schnittwerkzeugs, mittels welchen eine Kreisaussparung in dem Mehrkantkopf des Verbindungselements hergestellt wird.

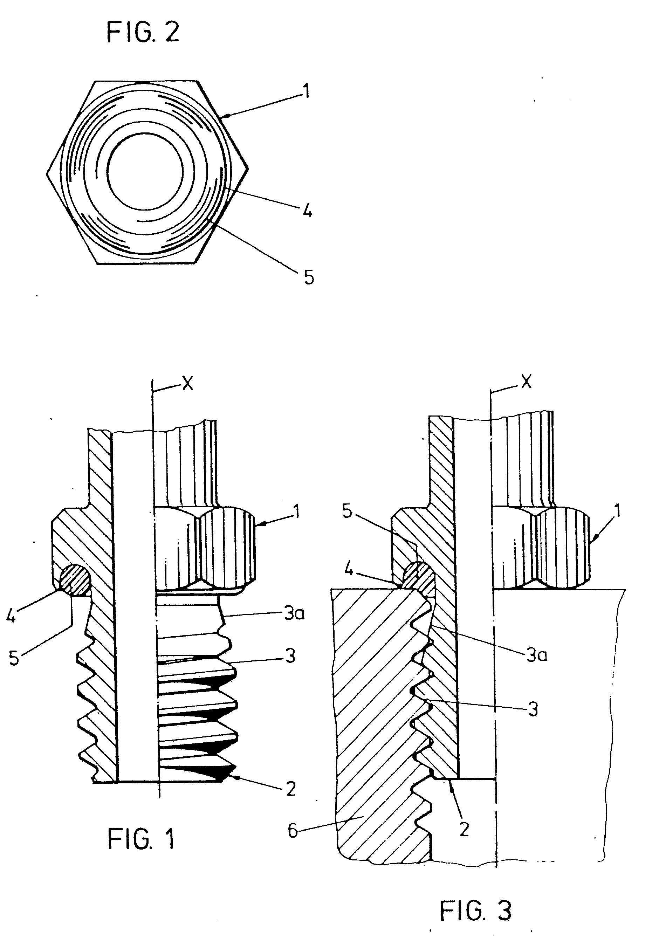

Das Dichtungselement nach der Fig. 1 umfaßt einen hohlen Mehrkantkopf 1 und eine hohle Schraube 2, die mit dem Mehrkantkopf 1 einstückig ist. Beim Einschrauben des Verbindungselements in einen Teil 6 einer Leitung oder eines Apparates zur Herstellung eines geschlossenen Druckmedium-Umlaufkreises dient der Mehrkantkopf 1 zum Aufsetzen eines Schlüssels, durch welchen das Verbindungselement in den Teil 6 eingeschraubt und anschließend angezogen wird. Die Schraube 2 ist mit einem Außengewinde 3 versehen, dessen Ende in der Nähe des Mehrkantkopfes 1 liegt. In den Mehrkantkopf 1 ist von unten in der Nähe des Gewindeendes 3a eine kammerförmige Kreisaussparung 4 zur Aufnahme eines Dichtungsringes 5 eingearbeitet.

Die Kreisaussparung kann durch eine schalenförmige Rille gebildet sein, wie aus den Fig. 1 und 3 ersichtlich ist. Diese schalenförmige Rille dient zur Aufnahme eines Dichtungsringes eines kreisförmigen Querschnittes. Die Kreisaussparung kann aber auch durch eine kapselförmige Nut gebildet sein, die zur Aufnahme eines Dichtungsringes eines mehreckigen Querschnittes bestimmt ist.

Beim Anziehen des Verbindungselements wird der aus der Kreisaussparung 4 herausragende Teil des Dichtungsringes 5 in Richtung der Längsachse X gequetscht. Dabei liegt das Metall des Mehrkantkopfes 1 auf dem Metall des Teiles 6, wie aus der Fig. 3 ersichtlich ist. Dadurch wird die Deformation des Dichtungsringes 5 in optimaler Weise begrenzt.

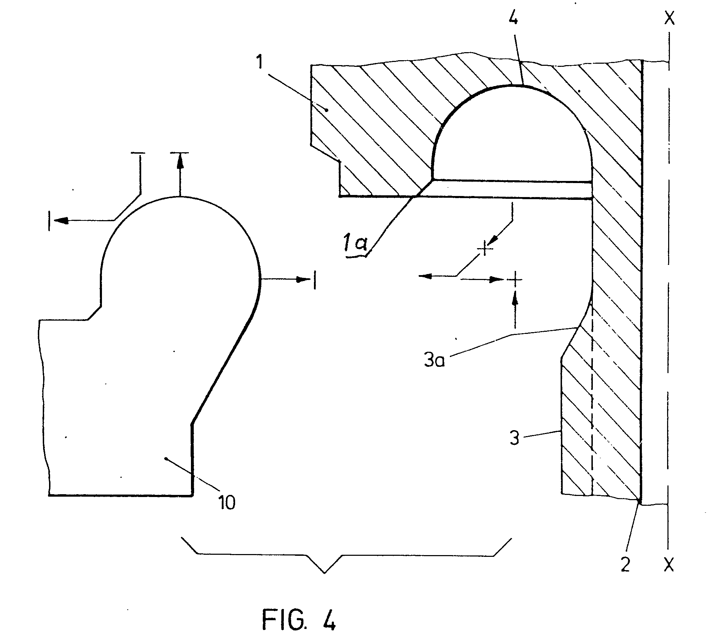

Ein in der Fig. 4 dargestelltes Schneidwerkzeug 10 wird in einem einzigen Arbeitsgang zuerst senkrecht zur Längsachse des Verbindungselements in den Anschnitt am Gewindeende 3a der Schraube 2 geführt. Dieser Anschnitt entsteht beim Schneiden des Gewindes 3 der Schraube 2. Das Schneidwerkzeug 10 wird anschließend parallel zur Längsachse des Verbindungselements in die Bodenfläche 1a des Mehrkantkopfes 1 geführt. Durch diese Verfahrensschritte entsteht im Mehrkantkopf 1 des Verbindungselements eine kammerförmige Kreisaussparung 4, die zur Aufnahme eines nicht dargestellten Dichtungsringes bestimmt ist.

Beim Zurückziehen des Schneidwerkzeugs 10 aus der vollendeten Kreisaussparung 4 wird es parallel zur Längsachse X des Verbindungselements geführt. Mit Vorteil kann das Schneidwerkzeug 10 beim Zurückziehen aus der Kreisaussparung 4 kurz vor seiner Null-Stellung eine zusätzliche Bewegung senkrecht weg von der Längsachse X des Verbindungselements ausführen, um die Kante der Kreisaussparung anzufasen.

Somit entsteht eine sich an das Gewindeende 3a der Schraube 2 anschließende Führungsfläche, die von dem Gewindeende 3a in die Wand der Kreisaussparung ohne Hindernisse übergeht. Dadurch wird die Montage des Dichtungsringes vereinfacht, weil er in die Kreisaussparung 4 ohne Verletzung über die Führungsfläche eingeführt werden kann. Als Dichtungsringe können im Handel laufend erhältliche Dichtungsringe verwendet werden. Die Kreisaussparung 4 wird mit einem einzigen Schneidwerkzeug hergestellt.

Der in die Kreisaussparung 4 eingesetzte Dichtungsring 5 gewährleistet eine zuverlässige Abdichtung und er kann nicht aus seiner vorgesehenen Einbaulage ausweichen. Durch diese Maßnahme wird eine vorzeitige Alterung des Dichtungsringes vermieden und er kann bei mehrmaligem Montieren des Verbindungsteiles ohne Beeinträchtigung seiner Eigenschaften wieder verwendet werden.

**Patentansprüche**

1. Verbindungselement zum Einschrauben in eine Leitung oder in einen Apparat zur Herstellung eines geschlossenen Druckmedium-Umlaufkreises, mit einem hohlen Mehrkantkopf (1) und einer hohlen, mit dem Mehrkantkopf (1) einstückigen Schraube (2) mit Außengewinde (3), wobei in dem Mehrkantkopf (1) in der Nähe des Gewindeendes (3a) der Schraube (2) eine kammerförmige Kreisaussparung (4) zur Aufnahme eines Dichtungsringes (5) eingearbeitet ist, dadurch gekennzeichnet, daß das Gewindeende (3a) der Schraube (2) stufenlos in die Wand der Kreisaussparung (4) übergeht, so daß zwischen dem Gewindeende (3a) und der Kreisaussparungswand eine sich an das Gewindeende (3a) und die Kreisaussparungswand anschließende Führungsfläche für den Dichtungsring entsteht.

2. Verbindungselement nach Patentanspruch 1, dadurch gekennzeichnet, daß die Führungsfläche parallel zur Längsachse (X) des Verbindungselements verläuft.

3. Verfahren zur Herstellung des Verbindungselements nach Patentanspruch 1, dadurch gekennzeichnet, daß ein einziges Schneidwerkzeug (10) in einem einzigen Arbeitsgang zuerst senkrecht zur Längsachse (X) des Verbindungselements in den Anschnitt am Gewindeende (3a) der Schraube (2) und anschließend parallel zur Längsachse (X) des Verbindungselements in die Bodenfläche (1a) des Mehrkantkopfes (1) geführt wird, wonach es aus der vollendeten Kreisaussparung (4) zurückgezogen wird.

4. Verfahren nach Patentanspruch 3, dadurch gekennzeichnet, daß das Schneidwerkzeug (10) beim Zurückziehen aus der Kreisaussparung (4) parallel zur Längsachse (X) des Verbindungselements geführt wird und kurz vor seiner Null-Stellung eine zusätzliche Bewegung senkrecht weg von der Längsachse (X) des Verbindungselements ausführt.

### Claims

1. Connecting element to be screwed into a pipeline or into an apparatus for producing a closed pressure-medium circuit, having a hollow polygonal head (1) and a hollow screw (2) with external thread (3) made in one piece with the polygonal head (1), a chamber-shaped circular recess (4) for receiving a sealing ring (5) being worked-in in the polygonal head (1) in the vicinity of the thread end (3a) of the screw (2), characterized in that the thread end (3a) of the screw (2) passes smoothly into the wall of the circular recess (4), so that a guide surface adjoining the thread end (3a) and the circular recess wall is formed for the sealing ring between the thread end (3a) and the circular recess wall.

2. Connecting element according to patent claim 1, characterized in that the guide surface runs parallel to the longitudinal axis (X) of the connecting element.

3. Process for manufacturing the connecting element according to patent claim 1, characterized in that a single cutting tool (10) is guided in a single working operation first perpendicular to the longitudinal axis (X) of the connecting element into the lead at the thread end (3a) of the screw (2) and thereafter parallel to the longitudinal axis (X) of the connecting element into the bottom surface (1a) of the polygonal head (1), whereafter it is withdrawn from the completed circular recess (4).

4. Process according to patent claim 3, characterized in that the cutting tool (10) is guided parallel to the longitudinal axis (X) of the connecting element upon being withdrawn from the circular recess (4) and shortly before its zero position carries out an additional movement perpendicularly away from the longitudinal axis (X) of the connecting element.

### Revendications

1. Elément de liaison à visser dans une conduite ou un appareil pour établir un circuit de circulation d'un fluide sous-pression fermé, comprenant une tête multi-pans (1) et une vis (2) creuse, faisant corps avec la tête multi-pans (1), et munie d'un filetage extérieur (3), une gorge en forme de chambre circulaire (4) étant ménagée dans la tête multi-pans (1) au voisinage de l'extrémité de filetage (3a) de la vis (2) pour recevoir un anneau d'étanchéité (5), caractérisé en ce que l'extrémité de filetage (3a) de la vis (3) passe sans discontinuité à la paroi de la gorge circulaire (4) de façon telle que, entre l'extrémité de filetage (3a) et la paroi de la gorge circulaire (4) se trouve formée und surface de guidage pour l'anneau d'étanchéité raccordée à l'extrémité de filetage (3a) et à la paroi de la gorge circulaire.

2. Elément de liaison selon la revendication 1, caractérisé en ce que la surface de guidage se configure parallèlement à l'axe longitudinal (X) de l'élément de liaison.

3. Procédé de fabrication de l'élément de liaison selon la revendication 1, caractérisé en ce qu'un unique outil de coupe (10) est conduit, en un seul processus de travail, tout d'abord perpendiculairement à l'axe longitudinal (X) de l'élément de liaison dans l'entame de la vis (2) à l'extrémité de filetage (3a), puis directement ensuite, parallèlement à l'axe longitudinal (X) de l'élément de liaison, dans la surface de base (1a) de la tête multi-pans (1), ensuite de quoi cet outil est retiré de la gorge circulaire (4) ainsi achevée.

4. Procédé de fabrication selon la revendication 3, caractérisé en ce que l'outil de coupe (10) est conduit parallèlement à l'axe longitudinal (X) de l'élément de liaison lorsqu'il est retiré de la gorge circulaire (4), puis subit, peu avant sa position zéro, un mouvement supplémentaire qui l'éloigne perpendiculairement de l'axe longitudinal (X) de l'élément de liaison.

FIG. 2

FIG. 1

FIG. 3

FIG. 4